# EUROPÄISCHE PATENTSCHRIFT

(11) **EP 2 030 759 B1**
(45) Veröffentlichungstag und Bekanntmachung des Hinweises auf die Patenterteilung: **09.06.2010**
(21) Anmeldenummer: 08014156.7
(22) Anmeldetag: 07.08.2008
(51) Int. Cl.: B29C 49/42, B29C 49/06

(54) **Blasmaschine mit Garniturteilhalter, sowie Garniturteilhalter**
Blowing machine with fitting holder and such a fitting holder
Appareil de moulage par soufflage avec support d'élément garniture et support d'élément garniture

(30) Priorität: 27.08.2007 DE 102007040620
(43) Veröffentlichungstag der Anmeldung: 04.03.2009
(73) Patentinhaber: Krones AG, 93073 Neutraubling (DE)
(72) Erfinder: Kiefl, Michael, 94522 Wallersdorf (DE)
(74) Vertreter: Grünecker, Kinkeldey, Stockmair & Schwanhäusser Anwaltssozietät

(56) Entgegenhaltungen:
- EP-A- 0 387 737
- WO-A-95/33616
- DE-A1- 3 306 510
- DE-A1- 3 420 857
- DE-A1- 3 425 602
- US-A- 4 351 631

## Beschreibung

Die Erfindung betrifft eine Blasmaschine gemäß Oberbegriff des Patentanspruchs 1 sowie einen Garniturteil-Halter gemäß Oberbegriff des Patentanspruchs 13.

Die Produktionsraten moderner Blasmaschinen konnten durch technische Weiterentwicklungen erheblich gesteigert werden. Da in der Praxis die Tendenz zu einer sehr großen Anzahl voneinander verschiedener, in derselben Blasmaschine zu produzierender Behälter geht, die sich beispielsweise durch unterschiedliche Mündungskonzepte unterscheiden, und jeweils die Umrüstung der Blasmaschine erfordern, stehen unzweckmäßig lange Wechselzeiten und komplizierte Wechselvorgänge den möglichen, hohen Produktionsraten entgegen. Es werden Entwicklungen betrieben, um die Wechselzeiten für Garniturteile wie Preformdorne deutlich zu verkürzen und deren Wechselvorgänge zu vereinfachen und/oder zu automatisieren. Andere Garniturteile, wie Abschirmplatten, die bei einer Umrüstung ebenfalls zu wechseln sind, werden in einer in der Praxis eingesetzten Blasmaschine dennoch nach wie vor von Hand und in komplizierten Wechselvorgängen getauscht. In der in der Praxis eingesetzten Blasmaschine ist jede Abschirmplatte mit einem U-förmigen Federbügel gesichert, der von Hand vom Halter abgezogen und nach Einsetzen der neuen Abschirmplatte wieder von Hand eingesetzt werden muss. Zum Entnehmen des Federbügels sind hoher Kraftaufwand und großes Geschick erforderlich, während das neuerliche Einfädeln des Federbügels hohe Zielgenauigkeit und eine verhältnismäßig starke Schubkraft erfordert. Die Wechselzeit für jede Abschirmplatte ist deshalb lang. Der Wechselvorgang ist mühsam, wobei in der Förderstrecke oftmals mehr als 100 Abschirmplatten zu wechseln sind.

Bei der aus EP-A-0 387 737 bekannten Blasmaschine weist jeder Halter zum austauschbaren Festlegen eines Preformdorns und einer hülsenförmigen Abschirmplatte als Garniturteile innere und äußere Ringnuten und Schnappverschlüsse auf. Der Schnappverschluss für den Preformdorn verbindet diesen mit einem Hubzapfen, der im Halter linear verschieblich angeordnet ist. Der Schnappverschluss für die hülsenförmige Abschirmplatte verbindet diese direkt mit dem Gehäuse des Garniturteil-Halters.

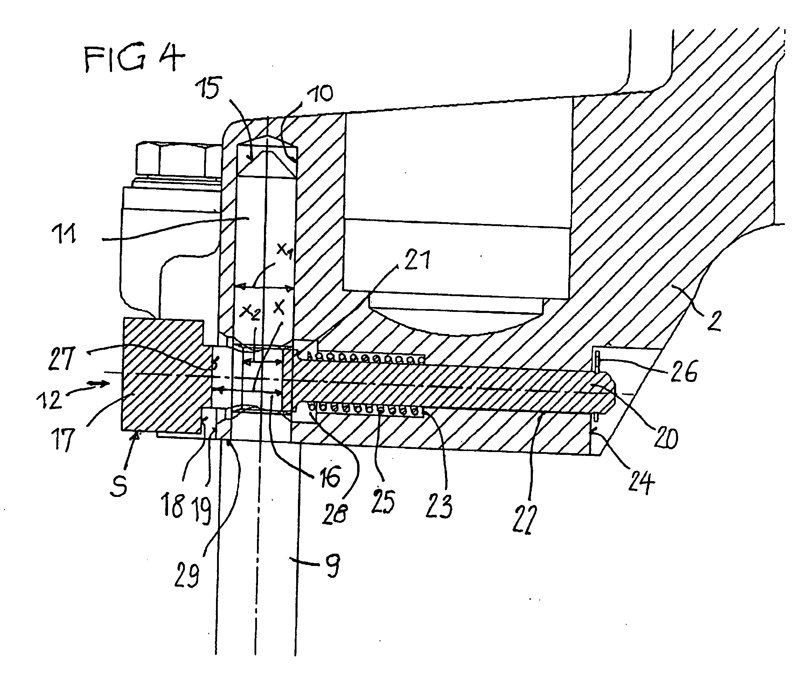

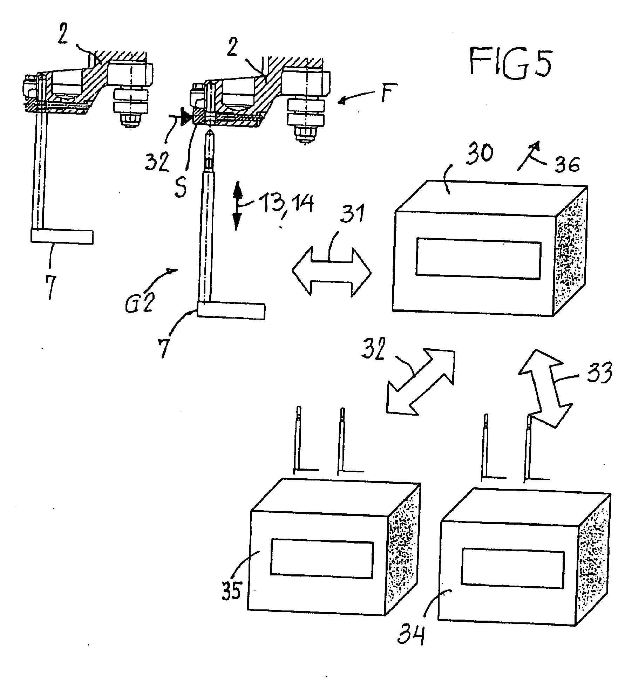

Aus US 2005/0013891 A1 ist eine Behälter-Blasmaschine mit einer zwei Formhälften aufweisendem Blasform bekannt. In der Blasform definiert eine Formhohlraum-Oberfläche einen Formhohlraum. In einer Vertiefung der Formhohlraum-Oberfläche sitzt austauschbar ein Formkern, der ein Detail der Oberfläche des in der Blasform geformten Behälters erzeugt. Der Formkern ist mit einem Bolzen in eine Bohrung der Formhälfte eingesteckt. Der Bolzen wird durch den Eingriff eines federbelasteten Stiftes gesichert. Am aus der Formhälfte vorstehenden Ende des Stiftes ist (Fig. 4, 5) ein Ring angeordnet. Zum Wechseln des Formkerns wird der Ring ergriffen und wird auf den Ring eine externe Kraft aufgebracht, die über den Ring indirekt auf den Stift übertragen wird und diesen linear und gegen die Federkraft aus dem Eingriff am Bolzen des Formkerns löst. Der gelöste Bolzen wird durch eine Feder aus der Bohrung herausgedrückt.

Aus DE-A-34 25 602 ist eine Schnellspanneinrichtung für eine Werkzeugmaschine bekannt, bei der ein scheibenförmiges Bauteil mit einer Innenbohrung auf einer Bauteil-Aufnahme zentriert und mittels eines durch die Innenbohrung in die Aufnahme eingreifenden Spannelementes festgespannt wird. Das Spannelement verkeilt sich durch eine Verdrehung mit einem in der Bauteil-Aufnahme verschraubten Widerlager. Zum Wechseln des Bauteils wird das Spannelement von der Bauteil-Aufnahme abgenommen.

Bei einem aus WO 95/33616 A bekannten Halter für einen Preformdorn ist der Preformdorn über eine federbelastete Bajonettkupplung mit einem linear verschiebbaren Stößel gekoppelt. Zum Abnehmen bzw. Anbringen des Preformdorns müssen von Hand gleichzeitig lineare und drehende Bewegungen ausgeübt werden.

Aus DE-A-33 06 510 sind eine federbelastete Kugelverrastung und eine Kugelverriegelung zwischen einer Greiferbacke und einem Greiferfinger eines Industrieroboters oder einer Werkzeugwechselvorrichtung bekannt. Die Verrastung lässt sich lösen, wenn in Führungsrichtung der Greiferbacke an dem Greiferfinger Kräfte ausgeübt werden. Zum Lösen der Verriegelung ist ein stiftartiges Werkzeug erforderlich, das linear eingedrückt wird, während gleichzeitig die Greiferbacke und der Greiferfinger in gegenseitigen Führungsrichtung voneinander weg bewegt werden.

Aus DE-A-34 20 857 ist eine Kugelverrastung zwischen einer Greiferbacke und einem Greiferfinger eines Industrieroboters oder einer Werkzeugwechselvorrichtung bekannt. Die Kugelverrastung lässt sich ohne Verwendung eines Werkzeuges mittels eines eine Rampe aufweisenden Druckknopfs entweder in der Greiferbacke oder im Greiferfinger lösen, ehe die Greiferbacke und der Greiferfinger in Führungsrichtung relativ zueinander bewegt werden.

Der Erfindung liegt die Aufgabe zugrunde, eine Blasmaschine der eingangs genannten Art sowie einen Garniturteilhalter anzugeben, mit denen eine kurze Wechselzeit und eine bequeme Wechselprozedur ermöglicht werden, und die sogar einen halbautomatischen oder vollautomatischen Garniturteil-Wechsel zulassen.

Die gestellte Aufgabe wird mit den Merkmalen des Patentanspruchs 1 und des Patentanspruchs 13 gelöst.

Da in der Blasmaschine das Schnellwechsel-Element während des Garniturteil-Wechsels im Halter verbleibt, entfällt die mühsame und kraftraubende Prozedur des Einfädelns nach dem Wechsel. Ferner braucht das Schnellwechsel-Element durch die externe Kraftbeaufschlagung nur am Halter verstellt zu werden, um den Garniturteil wechseln zu können, was sich rasch und mit relativ geringem Kraftaufwand durchführen lässt. Die Verstellbewegung ist sehr unkompliziert und eindeutig, so dass keine besondere Sorgfalt aufgebracht zu werden braucht. Insgesamt wird die Wechselzeit trotz üblicherweise beengter Platzverhältnisse beim Halter außerordentlich kurz und ist die Wechselprozedur weitaus bequemer als bisher. Der Garniturteilhalter ist mit dem Schnellwechsel-Element von vorneherein für rasche und bequeme Wechsel konzipiert, und zwar sowohl durch einen Bediener als auch halb- oder vollautomatisch durch einen Wechselautomaten, wobei die einfache Bewegung des Schnellwechsel-Elementes und der geringe Kraftaufwand hierfür entscheidende Vorteile sind.

Bei einer zweckmäßigen Ausführungsform definiert das Schnellwechsel-Element einen von außen zugänglichen Druckknopf, der quer zur Steckaufnahme für den Steckfuß der Abschirmplatte im Wesentlichen nur linear gedrückt wird. Das Schnellwechsel-Element wird dabei in der Verstellrichtung gegen die Kraft eines Federelementes geführt, das z.B. zum Herstellen und Einhalten der Sicherungsstellung dienen kann. Bei einer alternativen Ausführungsform könnte das Schnellwechsel-Element einen Zugknopf definieren, der gegen die Kraft des Federelementes aus der Sicherungsstellung in die Freigabestellung im Wesentliche linear gezogen wird. In jedem Fall bleibt das Schnellwechsel-Element beim Wechsel am Halter, hält das Federelement die Sicherungsstellung, und braucht das Schnellwechsel-Element nur über einen kurzen Hub und mit relativ geringem Kraftaufwand bewegt zu werden.

Bei einer bevorzugten Ausführungsform weist der Garniturteil zwei parallele Steckfüße auf, für die am Halter zwei Steckaufnahmen vorgesehen sind. Das Schnellwechsel-Element ist nur einer Steckaufnahme zugeordnet. Es wäre jedoch möglich, beide Steckfüße durch jeweils ein Schnellwechsel-Element zu sichern und beide Elemente gemeinsam zu verstellen.

Bei einer bevorzugten Ausführungsform wird zur Entnahme des Garniturteils auf das Schnellwechsel-Element der externe Kraftaufwand direkt ausgeübt. Beim Einsetzen des Garniturteils erfolgt eine interne Kraftbeaufschlagung des Schnellwechsel-Elementes durch den eingeschobenen Steckfuß selbst, die das Schnellwechsel-Element vorübergehend gegen die Kraft des Federelementes aus der Sicherungsstellung so weit in Richtung zur Freigabestellung verstellt, dass der Steckfuß eingesetzt werden kann, und danach das Schnellwechsel-Element unter der Kraft des Federelementes selbsttätig in die Sicherungsstellung zurückkehrt.

In einer zweckmäßigen Ausführungsform ist im jeweiligen Steckfuß eine Umfangsvertiefung, vorzugsweise eine umlaufende Nut, für den Sicherungseingriff des Schnellwechsel-Elementes vorgesehen, wobei das Schnellwechsel-Element einen in die Umfangsvertiefung einbringbaren Eingriffsbereich aufweist. Das Federelement hat die Aufgabe, die Sicherungsstellung des Schnellwechsel-Elementes zu halten. In der Sicherungsstellung wird jedoch der Steckfuß und damit der Garniturteil dann sogar formschlüssig verriegelt und gesichert. Diese Sicherung wird auch unter betriebsbedingten Vibrationen und/oder thermischen Einflüssen nicht ungewollt gelöst, da das Schnellwechsel-Element wie ein Riegel in den Steckfuß einfällt.

Bei einer baulich einfachen Ausführungsform ist im Halter ein die Steckaufnahme kreuzender Kanal für das Schnellwechsel-Element vorgesehen. Das Schnellwechsel-Element steht mit einem von außen zugänglich präsentierten, an einem Schaft angeordneten Druckknopf-Kopf aus dem Kanal vor. Das Federelement ist zweckmäßig als Schraubenfeder ausgebildet, die sich zwischen dem Schaft und dem Kanal abstützt und das Schnellwechsel-Element in Richtung zur Sicherungsstellung vorspannt. Zusammenwirkende Anschläge am Schaft und am Halter verhindern, dass das Schnellwechsel-Element unter der Federkraft aus dem Halter freikommen kann.

Zweckmäßig durchsetzt der Kanal den Halter vollständig und steht der Schaft am dem Druckknopf-Kopf gegenüberliegenden Ende über eine Kanalmündung vor. An diesem vorstehenden Ende trägt der Schaft den, vorzugsweise zur Montage abnehmbaren, Anschlag, der mit der Kanalmündung zusammenwirkt, um das Herausfallen des Schnellwechsel-Elementes zu verhindern.

Eine platzsparende Bauweise ergibt sich dann, wenn der Schaft und/oder der Druckknopf-Kopf in Querrichtung von einem Durchgang durchsetzt ist bzw. sind, vorzugsweise einem Durchgang mit der Form eines Langlochs, der z.B. in Verstellrichtung des Schnellwechsel-Elementes ein Übermaß gegenüber dem Außendurchmesser des Steckfußes aufweisen kann. Dieser Durchgang ermöglicht einerseits das Durchgehen des Steckfußes beim Einsetzen bzw. bei der Entnahme des Garniturteils, vorausgesetzt, dass das Schnellwechsel-Element aus der Sicherungsstellung ausreichend weit in Richtung zur oder bis in die Freigabestellung verstellt ist, und gewährleistet andererseits den formschlüssigen Eingriff in die Umfangsvertiefung des Steckfußes, sobald das Federelement das Schnellwechsel-Element in die Sicherungsstellung verlagert ist. Beide Mündungsbereiche des Durchgangs wirken dann formschlüssig mit der Umfangsvertiefung zusammen, oder zumindest der Mündungsbereich des Durchgangs, der mit dem in Ausziehrichtung des Steckfußes hinten liegenden Rand der Umfangsvertiefung zusammenwirkt.

Zweckmäßig wird die Freigabestellung des Schnellwechsel-Elementes durch eine Zusammenwirkung zwischen dem Druckknopf-Kopf und der dem Druckknopf-Kopf zugewandten Kanalmündung definiert. Dies bedeutet, dass zumindest zum Entnehmen des Garniturteils der Druckknopf-Kopf durch die externe Kraftbeaufschlagung bis zur Anlage an der Kanalmündung gedrückt wird, weil damit sichergestellt ist, dass der Steckfuß problemlos eingeführt werden kann, ohne dass die externe Kraftbeaufschlagung hierfür eine Positionierung des Schnellwechsel-Elementes zu bewirken bräuchte.

Mittels des bequem und mit geringem Kraftaufwand handhabbaren, beim Wechsel am Halter verbleibenden Schnellwechsel-Elementes lässt sich die Wechselzeit pro Garniturteil schon bei manuell durchgeführtem Wechsel erheblich verkürzen. Darüber hinaus ist dieses Konzept auch für automatische Wechselvorgänge bestens geeignet, da nur eine einfache, im Wesentlichen lineare Kraft mit einem bestimmten Ausmaß an einer bestimmten Stelle ausgeübt zu werden braucht, um die Freigabestellung einzustellen und den Garniturteil zu entnehmen oder einzusetzen. Dies kann mittels zumindest eines an einer Stelle der Förderstrecke angeordneten Schnellwechsel-Automaten durchgeführt werden, der das Schnellwechsel-Element an einem Halter oder einer Haltergruppe entsprechend verstellt und/oder den oder die Garniturteile einsetzt und/oder den oder die Garniturteile entnimmt. Alle diese Vorgänge können automatisiert ablaufen oder halbautomatisch mit manueller Unterstützung. Insgesamt lässt sich dadurch die Wechselzeit noch mehr verkürzen und lässt sich der Komfort für den Anwender erheblich steigern.

Der Schnellwechsel-Automat sollte zumindest einen Schnellwechsel-Element-Betätiger und zumindest einen Garniturteilgreifer aufweisen, und vorzugsweise auch zumindest ein Garniturteil-Magazin. Der Schnellwechsel-Automat kann an geeigneter Stelle an die Förderstrecke hingebracht und gegebenenfalls sogar dort angedockt werden. Er kann die Garniturteile einzeln oder gruppenweise wechseln. Es ist sogar möglich, den Schnellwechsel-Automaten, gegebenenfalls bei reduzierter Fördergeschwindigkeit, mit der Förderstrecke mitfahren oder drehen zu lassen oder stationär anzuordnen und die Förderstrecke getaktet zu bewegen.

Bei einer anderen, vorzugsweisen Ausführungsform ist der Schnellwechsel-Automat relativ zur Förderstrecke stationär angeordnet und wird er in Abstimmung auf Weiterrücktakte der Förderstrecke getaktet, oder ist der Schnellwechsel-Automat in einen an der Förderstrecke angeordneten oder zur Förderstrecke überführbaren, angetriebenen Stern integriert, der mit den Weiterrücktakten oder sogar einer kontinuierlichen Förderbewegung der Förderstrecke umläuft und dabei die Garniturteile einzeln wechselt. Gegebenenfalls ist der Schnellwechsel-Automat mit einem Schnellwechsel-Automaten für andere Garniturteile kombiniert, um bei jedem Wechselzyklus mehrere oder alle für eine Umstellung auf einen anderen Mündungstyp der Preforms zu tauschenden Garniturteile zu wechseln. So könnten beispielsweise gleichzeitig die Abschirmplatten und die Preformdorne gewechselt werden.

Eine Ausführungsform des Erfindungsgegenstandes wird anhand der Zeichnungen erläutert. Es zeigen:
- Fig. 1: eine Schemadarstellung einer Blasmaschine mit Garniturteile aufweisenden Haltern in einer Förderstrecke,
- Fig. 2: einen Teilschnitt eines Halters mit eingesetztem Garniturteil,
- Fig. 3: einen Teilschnitt eines Halters mit gerade entnommenem oder gerade einzusetzenden Garniturteil,
- Fig. 4: eine vergrößerte Schnittdarstellung zu Fig. 2, und
- Fig. 5: eine Schemadarstellung eines voll- oder halbautomatischen Garniturteil-Wechselsystems.

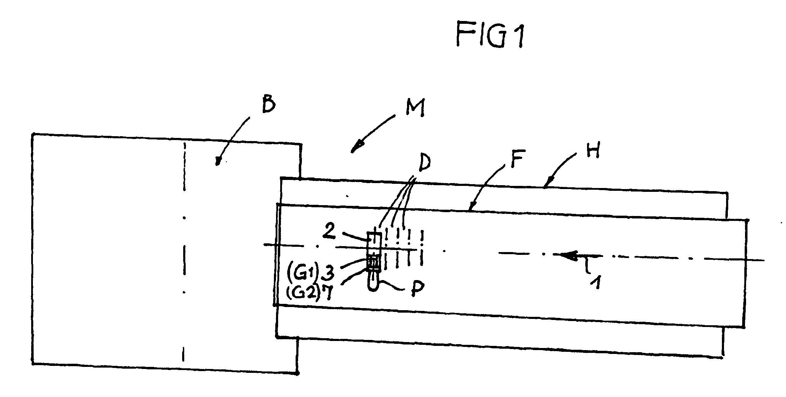

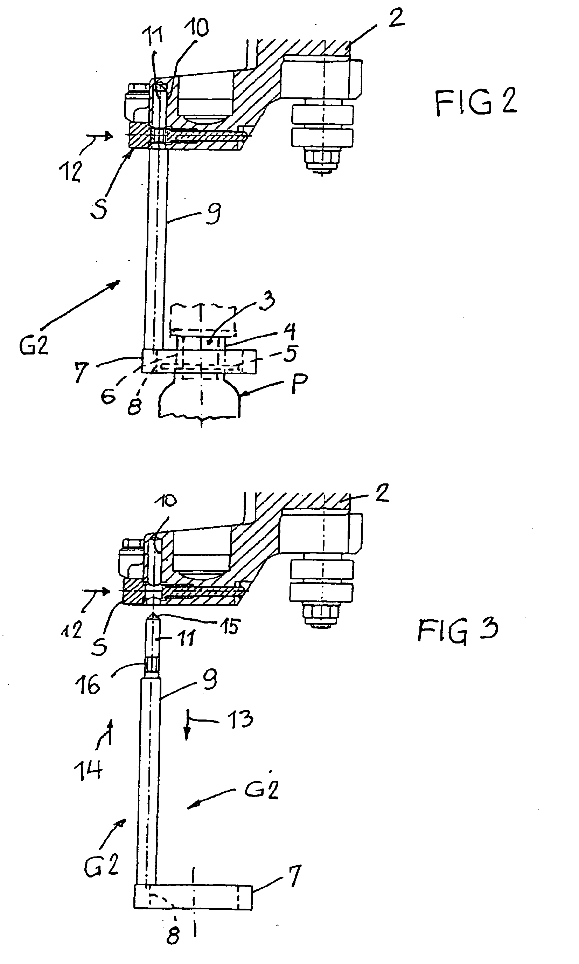

Fig. 1 verdeutlicht schematisch eine Blasmaschine M für Behälter, beispielsweise eine Streckblasmaschine für Kunststoffflaschen. Eine Blasstation B mit einem nicht gezeigten Blasformenstern ist an eine Förderstrecke F angeschlossen, die zumindest bereichsweise durch eine Heizvorrichtung H für durch Bestrahlen oder auf sonstige Weise von außen her aufzuheizende oder thermisch zu behandelnde Preforms P verläuft. Die Förderrichtung der Förderstrecke F ist durch einen Pfeil 1 angedeutet. Die Förderstrecke F enthält eine Vielzahl eng nebeneinander platzierter Dornvorrichtungen D, jeweils mit einem hier hängend montierten Halter 2 und zumindest einem daran tauschbar angebrachten Garniturteil G1 in Form eines Preformdorns 3, der in eine Mündung 4 (Fig. 2) jeweils eines Preforms P eingesteckt wird. Die Preformdorne 3 werden im Betrieb gegebenenfalls um ihre Achsen rotiert, während sie thermisch vorbehandelt werden.

Die Mündung 4 des Preforms P weist beispielsweise einen außenliegenden Tragring 5 (Fig. 2) und ein Außengewinde 6 auf. Speziell dieser Bereich (Tragring 5 und zumindest ein Teil des Außengewindes 6) muss bei der thermischen Vorbehandlung des Preforms abgeschirmt werden, weil er bereits die spätere Gestalt wie im fertiggeblasenen Behälter hat und durch die thermische Vorbehandlung, die der restliche Teil des Preforms P benötigt, Schaden erleiden könnte. Hierfür ist als weiterer, tauschbarer Garniturteil G2 eine sogenannte Abschirmplatte 7 mit einem oder mit zwei Steckfüßen 9 am Halter 2 angebracht, die mit einer Innenbohrung 8 diesen sensiblen Bereich der Mündung 4 des Preforms P abschirmt.

Der Steckfuß 9 ist mit einem Zapfen- oder rohrförmigen Endabschnitt 11 in eine als Sackbohrung ausgebildete Steckaufnahme 10 des Halters 2 eingesteckt und darin durch ein Schnellwechsel-Element S gesichert. Der Garniturteil G2 lässt sich somit nicht vom Halter 2 lösen. Um den Garniturteil G2 vom Halter 2 entnehmen zu können, ist eine externe Kraftbeaufschlagung beispielsweise in Richtung eines Pfeiles 12, auf das Schnellwechsel-Element S erforderlich. Dann lässt sich (Fig. 3) der Garniturteil G2, d.h. die Abschirmplatte 7, mit den Steckfüßen vom Halter 2 trennen (in Richtung eines Pfeiles 13) und durch einen anderen Garniturteil G2 ersetzen, der erneut nach externer Kraftbeaufschlagung des Schnellwechse-Elementes S in Richtung des Pfeiles 12 in die Steckaufnahmen 10 eingebracht und dann selbsttätig durch das Schnellwechsel-Element S gesichert wird. Der neu eingesetzte Garniturteil G2 unterscheidet sich beispielsweise durch eine andere Größe und Gestaltung der Abschirmplatte 7 und deren Innenbohrung 8, während sein Endabschnitt 11 zur Steckaufnahme 10 passt.

Im Endabschnitt 11 des Steckfußes 9 ist im Übrigen eine Umfangsvertiefung 16 zum formschlüssigen Eingriff des Schnellwechsel-Elementes S vorgesehen, zweckmäßig eine Umfangsnut 16, wie dies anhand Fig. 4 detaillierter erklärt wird.

Ein Wechsel lässt sich sowohl manuell durchführen, in dem die Kraft in Richtung des Pfeiles 12 mit einem Finger oder einem Werkzeug auf das Schnellwechsel-Element S ausgeübt und der Garniturteil G2 mit der Hand entnommen und mit der Hand eingesetzt wird, oder maschinell durch einen Schnellwechsel-Automaten oder Halbautomaten, der sämtliche oder zumindest einige der vorerwähnten Schritte durchführt.

Bei der in den Fig. 2 bis 4 dargestellten Ausführungsform ist sowohl zum Einsetzen als auch Entnehmen des Garniturteils die Verstellung des Schnellwechsel-Elementes S durch die externe Kraftbeaufschlagung erforderlich. Es wäre alternativ möglich, die in Fig. 4 mit 15 hervorgehobene Spitze des Endabschnitts 11 derart konisch oder gerundet auszubilden, dass allein durch das Einführen des Endabschnitts 11 das Schnellwechsel-Element S vorübergehend weggedrückt wird, bis der Endabschnitt 11 in der Steckaufnahme 10 sitzt und gesichert ist.

Das Schnellwechsel-Element S besitzt in der Ausführungsform in Fig. 4 einen Druckknopf-Kopf 17, der am Halter 2 von außen zugänglich positioniert ist. Eine Anschlagfläche 18 an der Unterseite des Druckknopf-Kopfes 17 ist auf eine Anschlagfläche 19 am Halter bzw. die Mündung eines Kanals 22 ausgerichtet, der den Halter 2 quer zur Steckaufnahme 10 durchsetzt. An den Druckknopf-Kopf 17 schließt sich ein stiftartiger Schaft 20 an, dessen freies Ende aus dem Kanal 22 vorsteht und dort einen Anschlag 26 trägt, der mit einer Anschlagfläche 24 des Halters zusammenwirkt, um ein Herausfallen des Schnellwechsel-Elementes S zu verhindern. Am Schaft 20 ist eine Schulter 21 angeformt, während in dem Kanal 22 eine Schulter 23 ausgebildet ist. Zwischen den Schultern 21 und 23 sitzt ein Federelement 25, beispielsweise eine Schraubenfeder, die das Schnellwechsel-Element S in Richtung auf die in Fig. 4 gezeigte Sicherungsstellung vorspannt, und, ohne Endabschnitt 11 in der Steckaufnahme 10, den Anschlag 26 an die Anschlagfläche 24 anlegt. Der Anschlag 26 ist beispielsweise zur Demontage des Schnellwechsel-Elementes S abnehmbar.

Den Schaft 20 durchsetzt ein Durchgang 27, der in einer Richtung senkrecht zur Zeichenebene in Fig. 4 zumindest eine Weite entsprechend dem Außendurchmessers des Endabschnittes 11 besitzt, und in Verstellrichtung des Schnellwechsel-Elementes S im Kanal 22 eine Abmessung x besitzt, die größer sein kann als der Außendurchmesser des Endabschnittes 11. Der Durchgang 27 ist zweckmäßig ein Langloch, wie dies in Fig. 4 durch die Krümmung der Schnittlinie im Umfang des Schaftes 22 angedeutet ist. Im Halter 2 ist im Kreuzungsbereich zwischen dem Kanal 22 und der Steckaufnahme 10 ein Freiraum 28 ausgespart, in den sich die Schulter 21 des Schaftes 20 verlagern lässt, wenn das Schnellwechsel-Element S gegen die Kraft des Federelementes 25 bis zur Anlage zwischen den Flächen 18, 19 verschoben wird.

Die Umfangsvertiefung 16 im Endabschnitt 11 ist zweckmäßig eine Umfangsnut mit einem Kerndurchmesser x2 kleiner als der Außendurchmesser x1 des Endabschnitts 11. Der Endabschnitt 11 bildet am Steckfuß 9 eine Schulter 29, die die Einstecktiefe in die Steckaufnahme 10 begrenzt. Der Endabschnitt 11 und/oder das Schnellwechsel-Element S können zylindrisch sein oder eine beliebige andere Querschnittsgestalt haben.

In der in Fig. 4 gezeigten Sicherungsstellung hintergreifen Teile der Mündungsränder des Durchgangs 27 die Begrenzungen der Umfangsvertiefung 16. Diese Position wird durch das Federelement 25 gesichert. Der Steckfuß 9 lässt sich nicht herausziehen. Wird auf das Schnellwechsel-Element S dann eine Kraftbeaufschlagung von außen beispielsweise in Richtung des Pfeiles 12 in Fig. 3 und 4 aufgebracht, die die Kraft des Federelementes 25 überwindet, dann wird das Schnellwechsel-Element S in seine Freigabestellung verschoben, in der beispielsweise die Flächen 18, 19 einander kontaktieren. Damit ist der Eingriff zwischen den Mündungsrändern des Durchgangs 27 und den Begrenzungen der Umfangsvertiefung 16 aufgehoben. Der Steckfuß 9 lässt sich mit dem Endabschnitt 11 aus der Steckaufnahme 10 herausziehen. Beim Einsetzen des neuen Garniturteils wird erneut das Sicherungselement S gegen die Kraft des Federelementes 25 in die Freigabestellung verschoben (gegebenenfalls durch die Keilwirkung der Spitze 15), bis der Endabschnitt 11 ordnungsgemäß in der Steckaufnahme 10 sitzt. Nach Loslassen des Druckknopf-Kopfes 17 (oder ohne jegliche Manipulation am Schnellwechsel-Element S) drückt dann das Federelement 25 das Schnellwechsel-Element S in die in Fig. 4 gezeigte Sicherungsstellung.

Fig. 5 verdeutlicht schematisch ein automatisiert betreibbares Schnellwechsel-System für die Garniturteile G2 bzw. Abschirmplatten 7 in der Förderstrecke F der Blasmaschine M. Es ist ein stationär an der Förderstrecke F angeordneter Wechselautomat 30 vorgesehen, der z.B. für einen Wechselvorgang an die Förderstrecke F hingebracht und gegebenenfalls angedockt werden könnte. Als weitere Alternative könnte der Wechselautomat 30 in einen Stern eingegliedert sein, der mit Wechseltakten der Förderstrecke getaktet arbeitet und einen Garniturteil G2 nach dem anderen oder jeweils gleich eine Garniturteilgruppe wechselt. Der Wechselautomat 30, der beispielsweise in Richtung des Pfeiles 36 zur Förderstrecke hin bewegbar ist, besitzt zumindest einen angetriebenen Betätiger 32, der auf das jeweilige Sicherungs-Element S ausgerichtet wird und die Kraftbeaufschlagung vornimmt, um den Garniturteil G2 in Richtung des Doppelpfeiles 13, 14 entnehmen oder einsetzen zu können. Die Entnahme bzw. das Einsetzen wird von entsprechend gesteuerten Greifern 31, 32, 33 bewirkt. Dem Wechselautomaten 30 ist ferner zumindest ein Magazin 35, 34 zugeordnet, zweckmäßig ein Magazin 34 für entnommene und ein Magazin 35 für einzusetzende Garniturteile G2.

Obwohl in Fig. 5 der Wechselautomat nur für den Wechsel der Garniturteile G2 in Form der Abschirmplatten 7 erläutert und gezeigt wird, könnte er bei einer alternativen Ausführungsform gleichzeitig auch den Wechsel anderer Garniturteile, wie beispielsweise der Preformdorne 3, durchführen. Der jeweilige Wechselautomat 30 könnte als Halbautomat fungieren, d.h., dass die eine oder andere Manipulation durch den Wechselautomaten und/oder einen Bediener durchgeführt wird.

## Patentansprüche

1. Blasmaschine (M) für Behälter, insbesondere Kunststoffflaschen, mit einer Förderstrecke (F) zum thermischen Vorbehandeln von mittels Haltern (2) transportierter Preforms (P), wobei jeder Halter (2) mit zumindest einer auswechselbar festgelegten Abschirmplatte (7), bestückt ist, die im Garniturteil-Halter (2) in wenigstens einer Steckaufnahme (10) mittels eines an wenigstens einem Steckfuß (9) der Abschirmplatte (7) angreifenden Sicherungsteils gesichert ist, **dadurch gekennzeichnet, dass** die Abschirmplatte (7) mittels eines eine Sicherungsstellung einnehmenden beim Abschirmplatten Wechsel am Garniturteil-Halter (2) verbleibenden Schnellwechsel-Elementes (S) in der Steckaufnahme (10) gesichert ist, das durch eine in Bezug auf den Garniturteil-Halter und das Schnellwechsel-Element (S) externe, auf eine bestimmte Stelle des Schnellwechsel-Elementes (S) ausgeübte Kraft (12) am Garniturteil-Halter von Hand und/oder maschinell zwischen der Sicherungsstellung und einer Freigabestellung für den Steckfuß (9) der Abschirmplatte verstellbar ist

2. Blasmaschine nach Anspruch 1, **dadurch gekennzeichnet, dass** das Schnellwechsel-Element (S) einen Druckknopf oder Zugknopf definiert, der quer zur Steckaufnahme (10) linear beweglich und, vorzugsweise, in Verstellrichtung gegen die Kraft eines Federelementes (25) geführt ist.

3. Blasmaschine nach Anspruch 1, **dadurch gekennzeichnet, dass** die Abschirmplatte (7) zwei parallele Steckfüße (9) und der Garniturteil-Halter (2) zwei Steckaufnahmen (10) für die Steckfüße (9) aufweisen, und dass zumindest einer Steckaufnahme (10) im Garniturteil-Halter (2) ein Schnellwechsel-Element (S) zugeordnet ist.

4. Blasmaschine nach Anspruch 1, **dadurch gekennzeichnet, dass** das Schnellwechsel-Element (S) nur zur Entnahme der Abschirmplatte (7) durch die ausgeübte Kraft von der Sicherungsstellung in die Freigabestellung verstellbar ist, und zum Einsetzen einer Abschirmplatte (7) durch eine seitens des Steckfußes (9, 11, 15) intern ausgeübte Kraft verstellbar ist.

5. Blasmaschine nach wenigstens einem der vorhergehenden Ansprüche, **dadurch gekennzeichnet, dass** der Steckfuß (9) eine Umfangsvertiefung (16), vorzugsweise eine umlaufende Nut, für einen Sicherungseingriff eines Eingriffsbereiches des Schnellwechsel-Elementes (S) aufweist.

6. Blasmaschine nach wenigstens einem der vorhergehenden Ansprüche, **dadurch gekennzeichnet, dass** im Garniturteil-Halter (2) ein die Steckaufnahme (10) kreuzender Kanal (22) für das Schnellwechsel-Element (S) vorgesehen ist, das mit einem von außen für die ausgeübte Kraft zugänglichen, aus dem Kanal vorstehenden Druckknopf-Kopf (17) an einem Schaft (20) ausgebildet und durch das als Schraubenfeder ausgebildete, im Kanal und am Schaft abgestützte Federelement (25), vorzugsweise in Richtung zur Sicherungsstellung, vorgespannt ist, und dass das Schnellwechsel-Element (S) durch zusammenwirkende Anschläge am Schaft (20) und am Garniturteil-Halter (2) gegen Herausfallen aus dem Kanal (22) gesichert ist.

7. Blasmaschine nach Anspruch 6, **dadurch gekennzeichnet, dass** der Kanal (22) den Halter (2) durchsetzt, und dass der Schaft (20) des Schnellwechsel-Elementes (S) an dem Druckknopf-Kopf (17) gegenüberliegenden Ende über eine Kanalmündung vorsteht und einen, vorzugsweise abnehmbaren, Anschlag (26) zur Zusammenarbeit mit der Kanalmündung trägt.

8. Blasmaschine nach wenigstens einem der vorhergehenden Ansprüche, **dadurch gekennzeichnet, dass** der Schaft (20) und/oder der Druckknopf-Kopf (17) in Querrichtung von einem Durchgang (27), vorzugsweise einem Langloch, durchsetzt ist bzw. sind, der zumindest in Verstellrichtung des Schnellwechsel-Elementes (S) ein Übermaß gegenüber dem Außendurchmesser des Steckfußes (9) aufweist.

9. Blasmaschine gemäß Anspruch 1, **dadurch gekennzeichnet, dass** die Freigabestellung des Schnellwechsel-Elementes (S) durch Zusammenwirken zwischen dem Druckknopf-Kopf (17) und der dem Druckknopf-Kopf (17) zugewandten Kanalmündung definiert ist.

10. Blasmaschine gemäß wenigstens einem der vorhergehenden Ansprüche, **dadurch gekennzeichnet, dass** entlang der Förderstrecke (F) zumindest ein antreibbarer Schnellwechsel-Automat (30) zum Ausüben der externen Kraft auf das jeweilige Schnellwechsel-Element (S) und/oder Einsetzen und/oder Entnehmen der jeweiligen Abschirmplatte (7) vorgesehen ist.

11. Blasmaschine gemäß Anspruch 10, **dadurch gekennzeichnet, dass** der Schnellwechsel-Automat (30) zum Ausüben der externen Kraft zumindest einen Schnellwechsel-Element-Betätiger (32) und zumindest einen Garniturteil-Greifer (31 - 33) aufweist, und, vorzugsweise, zumindest ein Garniturteil-Magazin (34, 35).

12. Blasmaschine gemäß Anspruch 11, **dadurch gekennzeichnet, dass** der Schnellwechsei-Automat (30) relativ zur Förderstrecke (F) stationär angeordnet und in Abstimmung auf Weiterrücktakte der Förderstrecke (F) oder z.B. in einem Stern mit der Förderstrecke (F) mitlaufend getaktet betreibbar ist.

13. Garniturteil-Halter (2) einer Preform-Förderstrecke (F) einer Blasmaschine, mit einer auswechselbar festgelegten Abschirmplatte (7), die mit zumindest einem Steckfuß (9) in eine Steckaufnahme (10) des Garniturteil-Halters (2) eingreift und darin während des Transportes der Preform (P) gesichert ist, **dadurch gekennzeichnet, dass** die Abschirmplatte (7) mittels eines beim Abschirmplatten-Wechsel am Garniturteil-Halter (2) verbleibenden, am Garniturteil-Halter (2) eine Sicherungsstellung am Steckfuß (9) einnehmenden Schnellwechsel-Elementes (S) gesichert ist, das durch eine in Bezug auf den Garniturteil-Halter (2) und das Schnellwechsel-Element (S) externe, von Hand oder maschinell direkt auf eine bestimmte Stelle des Schnellwechsel-Elementes (S) ausgeübte Kraft (12) am Garniturteil-Halter (2) zwischen der Sicherungsstellung und einer Freigabestellung für den Steckfuß (9) der Abschirmplatte (7) verstellbar ist.

## Claims

1. Blow-moulding machine (M) for containers, in particular plastic bottles, with a conveying section (F) for thermally pretreating preforms (P) transported by means of holders (2), each holder (2) being fitted with at least one exchangeably fixed shielding plate (7), which is secured in the fitting-part holder (2) in at least one plug-in socket (10) by means of a securing part acting on at least one plug-in foot (9) of the shielding plate (7), **characterized in that** the shielding plate (7) is secured in the plug-in socket (10) by means of a quick-change element (S), which assumes a securing position and remains on the fitting-part holder (2) when the shielding plate is changed and can be adjusted manually and/or by machine between the securing position and a release position for the plug-in foot (9) of the shielding plate by a force (12) exerted on a specific point of the quick-change element (S) that is external with respect to the fitting-part holder and the quick-change element (S).

2. Blow-moulding machine according to Claim 1, **characterized in that** the quick-change element (S) defines a pushbutton or pulling knob, which is linearly movable transversely in relation to the plug-in socket (10) and, preferably, is guided in the adjusting direction counter to the force of a spring element (25).

3. Blow-moulding machine according to Claim 1, **characterized in that** the shielding plate (7) has two parallel plug-in feet (9) and the fitting-part holder (2) has two plug-in sockets (10) for the plug-in feet (9), and **in that** at least one plug-in socket (10) in the fitting-part holder (2) is assigned a quick-change element (S).

4. Blow-moulding machine according to Claim 1, **characterized in that** the quick-change element (S) is only adjustable by the exerted force from the securing position into the release position for removing the shielding plate (7), and is adjustable for inserting a shielding plate (7) by force exerted internally by the plug-in foot (9, 11, 15).

5. Blow-moulding machine according to at least one of the preceding claims, **characterized in that** the plug-in foot (9) has a circumferential depression (16), preferably a peripheral groove, for a securing engagement of an engaging region of the quick-change element (S).

6. Blow-moulding machine according to at least one of the preceding claims, **characterized in that** a channel (22) crossing the plug-in socket (10) is provided in the fitting-part holder (2) for the quick-change element (S), which is formed with a pushbutton head (17) on a shank (20), protruding from the channel and accessible from the outside for the force exerted and by which the spring element (25) formed as a helical spring and supported in the channel and on the shank is prestressed, preferably in the direction of the securing position, and **in that** the quick-change element (S) is secured against falling out of the channel (22) by interacting stops on the shank (20) and on the fitting-part holder (2).

7. Blow-moulding machine according to Claim 6, **characterized in that** the channel (22) passes through the holder (2), and **in that** the shank (20) of the quick-change element (S) protrudes at the end opposite the pushbutton head (17) beyond a channel opening and carries a stop (26), preferably a removable stop, for the interaction with the channel opening.

8. Blow-moulding machine according to at least one of the preceding claims, **characterized in that** the shank (20) and/or the pushbutton head (17) is or are passed through in the transverse direction by a passage (27), preferably an elongated hole, which has an oversize in comparison with the outside diameter of the plug-in foot (9), at least in the adjusting direction of the quick-change element (S).

9. Blow-moulding machine according to Claim 1, **characterized in that** the release position of the quick-change element (S) is defined by interaction between the pushbutton head (17) and the channel opening towards the pushbutton head (17).

10. Blow-moulding machine according to at least one of the preceding claims, **characterized in that** at least one drivable automatic quick-change device (30) for exerting the external force on the respective quick-change element (S) and/or inserting and/or removing the respective shielding plate (7) is provided along the conveying section (F).

11. Blow-moulding machine according to Claim 10, **characterized in that** the automatic quick-change device (30) for exerting the external force has at least one quick-change element actuator (32) and at least one fitting-part gripper (31-33), and, preferably, at least one fitting-part magazine (34, 35).

12. Blow-moulding machine according to Claim 11, **characterized in that** the automatic quick-change device (30) is arranged stationarily in relation to the conveying section (F) and can be operated in time with the advancing increments of the conveying section (F) or for example in a clocked manner in a star with the conveying section (F).

13. Fitting-part holder (2) of a preform conveying section (F) of a blow-moulding machine, with an exchangeably fixed shielding plate (7), which engages with at least one plug-in foot (9) in a plug-in socket (10) of the fitting-part holder (2) and is secured therein during the transport of the preform (P), **characterized in that** the shielding plate (7) is secured by means of a quick-change element (S), which remains on the fitting-part holder (2) when the shielding plate is changed, assumes a securing position on the plug-in foot (9) and can be adjusted between the securing position and a release position for the plug-in foot (9) of the shielding plate (7) by a force (12) exerted manually or by machine directly on a specific point of the quick-change element (S) that is external with respect to the fitting-part holder (2) and the quick-change element (S).

## Revendications

1. Machine de moulage par soufflage (M) pour des récipients, en particulier des bouteilles de matière plastique, comprenant une section de transport (F) pour le traitement thermique préalable de préformes (P) transportées au moyen de supports (2), chaque support (2) étant équipé d'au moins une plaque de protection (7) fixée de manière interchangeable, bloquée dans le support d'élément de garniture (2) dans au moins un logement d'emboîtement (10) au moyen d'un élément de blocage agissant sur au moins un pied emboîtable (9) de la plaque de protection (7), **caractérisée en ce que** la plaque de protection (7) est bloquée dans le logement d'emboîtement (10) au moyen d'un élément à serrage rapide (S) qui occupe une position de blocage et reste lors du changement sur le support d'élément de garniture (2), lequel élément à serrage rapide peut être déplacé sur le support d'élément de garniture, manuellement et/ou mécaniquement, entre la position de blocage et une position de dégagement pour le pied emboîtable (9) de la plaque de protection, par une force externe (12) par rapport au support d'élément de garniture et à l'élément à serrage rapide (S), exercée en un endroit défini de l'élément à serrage rapide (S).

2. Machine de moulage par soufflage suivant la revendication 1, **caractérisée en ce que** l'élément à serrage rapide (S) définit un bouton de pression ou un bouton de traction, qui est mobile linéairement à la transversale du logement d'emboîtement (10) et est guidé, de préférence, dans la direction de déplacement contre la force d'un élément de ressort (25).

3. Machine de moulage par soufflage suivant la revendication 1, **caractérisée en ce que** la plaque de protection (7) présente deux pieds emboîtables parallèles (9) et le support d'élément de garniture (2) présente deux logements d'emboîtement (10) pour les pieds emboîtables (9), et qu'un élément à serrage rapide (S) est associé à au moins un logement d'emboîtement (10) dans le support d'élément de garniture (2).

4. Machine de moulage par soufflage suivant la revendication 1, **caractérisée en ce que** l'élément à serrage rapide (S) n'est déplaçable par la force exercée, de la position de blocage dans la position de dégagement, que pour le retrait de la plaque de protection (7), et est déplaçable pour la mise en place d'une plaque de protection (7) par une force exercée intérieurement du côté du pied emboîtable (9, 11, 15).

5. Machine de moulage par soufflage suivant l'une au moins des revendications précédentes, **caractérisée en ce que** le pied emboîtable (9) présente un creux périphérique (16), de préférence une gorge circulaire, pour une prise de blocage d'une zone de prise de l'élément à serrage rapide (S).

6. Machine de moulage par soufflage suivant l'une au moins des revendications précédentes, **caractérisée en ce qu'**il est prévu, dans le support d'élément de garniture (2), un canal (22), croisant le logement d'emboîtement (10), pour l'élément à serrage rapide (S), qui est réalisé sur une tige (20) avec une tête de bouton de pression (17) accessible de l'extérieur pour la force exercée et dépassant du canal, et est précontraint par l'élément de ressort (25), réalisé sous forme de ressort hélicoïdal et supporté dans le canal et sur la tige, de préférence en direction de la position de blocage, et que l'élément à serrage rapide (S) est bloqué par des butées coopérantes sur la tige (20) et sur le support d'élément de garniture (2) contre la chute hors du canal (22).

7. Machine de moulage par soufflage suivant la revendication 6, **caractérisée en ce que** le canal (22) traverse le support (2) et que la tige (20) de l'élément à serrage rapide (S) dépasse d'un débouché du canal sur l'extrémité en vis-à-vis de la tête de bouton de pression (17) et supporte une butée (26), de préférence amovible, pour la coopération avec le débouché du canal.

8. Machine de moulage par soufflage suivant l'une au moins des revendications précédentes, **caractérisée en ce que** la tige (20) et/ou la tête de bouton de pression (17) est/sont traversée(s) dans la direction transversale par un passage (27), de préférence un trou oblong, qui présente au moins dans la direction de déplacement de l'élément à serrage rapide (S) un surdimensionnement par rapport au diamètre extérieur du pied emboîtable (9).

9. Machine de moulage par soufflage suivant la revendication 1, **caractérisée en ce que** la position de dégagement de l'élément à serrage rapide (S) est définie par coopération entre la tête de bouton pression (17) et le débouché du canal tourné vers le tête de bouton de pression (17).

10. Machine de moulage par soufflage suivant l'une au moins des revendications précédentes, **caractérisée en ce qu'**il est prévu, le long de la section de transport (F), au moins un automate d'échange rapide (30) entraînable, pour exercer la force externe sur l'élément à serrage rapide (S) respectif et/ou pour la mise en place et/ou le retrait de la plaque de protection (7).

11. Machine de moulage par soufflage suivant la revendication 10, **caractérisée en ce que** l'automate d'échange rapide (30), destiné à exercer la force externe, présente au moins un actionneur (32) d'élément à serrage rapide et au moins un preneur (31 - 33) d'élément de garniture, et, de préférence, au moins un magasin (34, 35) d'éléments de garniture.

12. Machine de moulage par soufflage suivant la revendication 11, **caractérisée en ce que** l'automate d'échange rapide (30) est disposé de façon stationnaire par rapport à la section de transport (F) et est entraînable en cadence avec la section de transport (F) en accord avec la cadence de déplacement de la section de transport (F) ou, par exemple, dans une étoile.

13. Support d'élément de garniture (2) d'une section de transport (F) de préformes d'une machine de moulage par soufflage, comprenant une plaque de protection (7) fixée de manière interchangeable, qui s'engage par au moins un pied emboîtable (9) dans un logement d'emboîtement (10) du support d'élément de garniture (2) et y est bloquée pendant le transport de la préforme (P), **caractérisé en ce que** la plaque de protection (7) est bloquée au moyen d'un élément à serrage rapide (S) restant lors du changement de plaques de protection sur le support d'élément de garniture (2) et occupant sur le support d'élément de garniture (2) une position de blocage sur le pied emboîtable (9), lequel élément à serrage rapide (S) peut être déplacé sur le support d'élément de garniture (2), entre la position de blocage et une position de dégagement pour le pied emboîtable (9) de la plaque de protection (7), par une force externe (12) par rapport au support d'élément de garniture (2) et à l'élément à serrage rapide (S), exercée manuellement ou mécaniquement directement en un endroit défini de l'élément à serrage rapide (S).
